# EUROPÄISCHE PATENTANMELDUNG

(11) **EP 0 686 499 A2**
(43) Veröffentlichungstag der Anmeldung: **13.12.1995**
(21) Anmeldenummer: 95108022.5
(22) Anmeldetag: 24.05.1995
(51) Int. Cl.: B32B 27/32, B65D 65/40

(54) **Gasundurchlässige, hochtransparente und durchstichfeste Verbundfolie**

(30) Priorität: 06.06.1994 DE 4419709
(71) Anmelder: WOLFF WALSRODE AG, D-29655 Walsrode (DE)
(72) Erfinder: Kaschel, Gregor, Dr., D-29664 Walsrode (DE); Reiners, Ulrich, Dr., D-29643 Neuenkirchen (DE)
(74) Vertreter: Braun, Rolf, Dr.

(57) **Zusammenfassung**

Siegelbare Verbundfolie aus einem Substrat, das mindestens eine Schicht Polyamid und mindestens eine Schicht Polyamid und mindestens eine Schicht Ethylen/Vinylalkohol-Copolymer enthält, mit einer zweilagigen Siegelschicht, wobei die beiden Siegelschichten aus Propylen-Copolymerisaten, welche bis zu 15 Mol-% weitere α-Olefine mit höchstens 12 CAtomen enthalten, bestehen, die sich im Gehalt der α-Olefine um mehr als 1 Mol-% unterscheiden.

## Beschreibung

Zahlreiche Produkte sind in Folien abgepackt. Folien erhalten die Produktqualität der Füllgüter über ihren Lagerungszeitraum, sorgen für Hygiene und sie sind leicht zu handhaben. Die Sicherung der Produktqualität beruht auf den Barriereeigenschaften der Folie gegenüber vielen Gasen. Ein wesentlicher Aspekt zur Beurteilung ist hierbei die Permeabilität der Packstoffe. Angestrebt wird häufig eine praktisch undurchlässige Hülle, wie sie zum Beispiel durch Glas oder Metall erreicht werden kann. Verpackungen aus Kunststoff haben gegenüber Glas oder Metall unter anderem den Vorteil, daß sie sehr leicht, transparent und preiswert sind. Als Nachteil steht dem die in der Regel niedrige Wasserdampf- und Sauerstoffbarriere gegenüber. Normalerweise lassen sich nicht alle an eine Verpackung gestellten Anforderungen durch ein Polymer erfüllen, daher werden Polymere unterschiedlicher Sorten kombiniert. Die Foliendicke kann somit deutlich reduziert werden.

Den Stand der Technik zu Eigenschaften und Anwendungen von Polyamid enthaltenden Folien berichten Schulte et al. (Kuststoffe 79(1989) 9, S. 818-822) und Domininghaus (Hans Dominighaus: Die Kunststoffe und ihre Eigenschaften, VDI-Verlag 1992, Düsseldorf; siehe S. 448). Üblicherweise wird als Siegelschichtmaterial Polyethylen oder Copolymerisate des Ethylens eingesetzt. Der Vorteil einer polyethylenischen Siegelschicht liegt unter anderem in der hohen Flexibilitat, die auch bei Temperaturen unterhalb von 0°C beibehalten wird. Weiterhin ermöglichen niedrige Siegeltemperaturen hohe Verarbeitungsgeschwindigkeiten auf Verpackungsmaschinen.

In The Wiley Encyclopedia of Packaging Technology (Hrg. M. Bakker, D. Eckroth; John Wiley & Sons, 1986; siehe S. 270-275) wird der Stand der Technik betreffend Ethylen/Vinylalkohol-Copolymerisat enthaltenen Folien angegeben. In Verbindung mit Polyamid wird als Beispiel der Aufbau Polyamid/(Ethylen/Vinylalkohol-Copolymerisat)/Polyamid/Ionomer genannt.

Den Stand der Technik betreffend Barrierefolien gibt Delventhal (Verpackungs-Rundschau 3/1991, Seite 19-23) wieder. Von Barrierefolien spricht man in der Praxis der Lebensmittelverpackung in der Regel dann, wenn die Sauerstoffdurchlässigkeit der Folien kleiner 100 cm³/(m² d bar) und die Wasserdamfbarriere Kleiner 10 g/(m² d) ist. Im Artikel werden Beispiele über die Eigenschaften und Anwendungsbereiche von coextrudierten Folien aufgezeigt. Auch hier dominieren Siegelschichten auf Basis von Polyethylen.

Für die Verpackung vorgebackener Baguettes mit Schutzgas, die mit Infrarotstrahlen sterilisiert werden, werden nach Delventhal unverstreckte Folien mit dem Aufbau PA6/EVOH/PA6/Kleber/PP eingesetzt, da die aus Polypropylen bestehende Siegelschicht Temperaturanwendungen bis 130°C und mehr erlaubt. Siegelschichten aus Polypropylen haben allerdings den Nachteil, daß sie auf Grund des Kristallitschmelzbereiches von 160°C bis 168°C im Vergleich zu Polyethylen deutlich höhere Siegeltemperaturen benötigen. Eine weitere nachteilige Eigenschaft von Polypropylen ist die bei Temperaturen um 0°C eintretende Versprödung, die durch Block-Copolyerisation mit Ethylen und/oder Elastifizieren mit thermoplastischen Elastomeren (z.B. Ethylen/Propylen-Dien-Copolymerisate) zu tieferen Temperaturen verschoben werden kann (Domininghaus, S. 125), was aber in der Regel zu einer Eintrübung der Folie führt.

In AU-8776-284-A wird ein 7-schichtiges, thermoformbares, kunststoffhaltiges Laminat für die Verpackung von Lebensmitteln beschrieben. Das Laminat enthält eine Mittelschicht aus einem Sauerstoff sperrenden Material, vorzugsweise ein Ethylen/Vinylalkohol-Copolymerisat, zu beiden Seiten der Mittelschicht Schichten aus Polyamid mit kontrollierter Kristallinität, vorzugsweise Polyamid 6, eine Siegelschicht, vorzugsweise ein Ionomer, Polyolefin, Ethylen-α-Olefin-Copolymer oder Blend dieser Stoffe, eine gegen Feuchtigkeit sperrenden Außenschicht, vorzugsweise aus Polypropylen, und Haftvermittlern, vorzugsweise anhydridgepfropfte Polyolefine, zwischen den Polyamid- und Außenschichten. Alle Folienschichten werden in einem Prozeßschritt in einer Düse zusammengeführt. Die Haftvermittler- und Siegelschichten werden vorzugsweise vernetzt und die Folie vorzugsweise in Längsrichtung orientiert. Die so angeführte Folie setzt eine Coextrusionstechnik für 7 Schichten voraus, was einen erheblichen maschinellen Aufwand bedeutet. Weiterhin stellt die Vorrichtung zur Vernetzung einiger Folienschichten zusätzliche Anforderungen an die Herstellbedingungen.

In EP-457-648-A wird eine thermoformbare Barrierefolie erwähnt, die aus mindestens 6 Kunststoffschichten besteht. Sie enthält mindestens eine Schicht aus Polyolefinen, mindestens eine Schicht aus Polyamid, mindestens einen coextrudierbaren Haftvermittler und mindestens eine Schicht aus einer Mischung aus Ethylen/Vinylalkohol-Copolymerisat mit Polypropylen und einer haftvermittelnden Komponente. Die Neuheit dieser Folie wird darin gesehen, daß beide Außenschichten aus Polyethylen bestehen und die Polyamidschichten in Kontakt mit der eben genannten Mischung stehen. Die Folie ist dünner als 250 µm, vorzugsweise 180 bis 250 µm dick.

Folien, die Polyamid, Ethylen/Vinylalkohol-Copolymerisat und eine polyethylenische Siegelschicht enthalten, sind weit verbreitet und somit Stand der Technik. Sie werden für Tiefziehanwendungen im Dickenbereich von vorzugsweise von 120 bis 300 µm eingesetzt. Als Folie für Schlauchbeutel oder Deckelfolie variiert die Dicke vorzugsweise von 80 bis 120 µm. Aus ökologischen und ökonomischen Gründen werden verstärkt dünnere Folien nachgefragt.

Es stellt sich daher die Aufgabe, eine Folie bereitzustellen, die folgenden Anforderungen entspricht:
1. niedriges Flächengewicht:
   Das Flächengewicht gibt das Gewicht einer Folie pro Flächeneinheit wieder, es wird üblicherweise mit g/m² oder kg/m² angegeben. Von Seiten der abpackenden Industrie wird im allgemeinen gefordert, mit einer leichten Verpackung eine definiert große Fläche zu umhüllen. Aus ökologischer und ökonomischer Sicht bedeutet dies für das Verpackungsmaterial ein möglist niedriges Flächengewicht.
2. Barriere gegenüber Gasen:
   Eine wesentliche Aufgabe der Verpackung ist der Schutz des Inhaltes. Vielfach ist die Haltbarkeit des Inhaltes durch die Aufnahme von Feuchtigkeit oder Sauerstoff zeitlich sehr begrenzt, insbesondere der Verderb von Lebensmitteln sei hier genannt. Vielfach wird daher eine Folie gefordert, die gegenüber Sauerstoff und Wasserdampf nahezu undurchlässig ist. Als Maß für die Durchlässigkeit einer Folie gegenüber diesen Stoffen wird die Sauerstoff- und Wasserdampfpermeabilität angegeben.
3. mechanische Festigkeit:
   Die mechanischen Festigkeiten einer Verpackung werden je nach Anforderungskriterium angegeben. Oft führen harte, scharfe Spitzen des Füllgutes zu einer mechanischen Verletzung der Verpackung, die Haltbarkeit des Inhaltes wird somit drastisch reduziert. In der Vergangenheit hat sich gezeigt, daß die Prüfung der Durchstichfestigkeit ein wichtiges und geeignetes Kriterium bei der Beurteilung von Folien ist.
4. optische Anforderung:
   Die Verpackung darf die Präsentation des Inhaltes nicht nachteilig beeinflußen. In der Regel wird eine transparente Folie gefordert. Der Inhalt muß durch die Folie möglichst naturgetreu zu sehen sein. Hierzu ist ein geeignetes Beurteilungskriterium die Absorption des sichtbaren Lichtes (Trübung).

Die aufgelisteten Kriterien gelten für Folien im Lebensmittelbereich wie für medizinische oder technische Verpackungen. Auch ist die Art der Verpackungsmaschine ohne Einfluß. Es ist unerheblich, ob die Folie auf einer horizontalen oder vertikalen Schlauchbeutelmaschine, auf einer Form- und Füllstation als Deckel- oder Muldenfolie verarbeitet wird.

Erfindungsgemäß gelang dies durch eine siegelbare Verbundfolie aus einem Substrat, das mindestens eine Schicht aus Polyamid und mindestens eine Schicht Ethylen/Vinylalkohol-Copolymerisat enthält, mit einer zweilagigen Siegelschicht, wobei die beiden Siegelschichten aus Propylen-Copolymerisaten, welche bis zu 15 Mol-% weitere α-Olefine mit höchstens 12 C-Atomen enthalten, bestehen, die sich im Gehalt der α-Olefine um mehr als 1 Mol-% unterscheiden.

Das Polyamid ist vorzugsweise vom Typ PA6, es kann aber auch aus anderen aliphatischen Polyamiden wie zum Beispiel PA66, PA11, PA12, PA69, PA610 oder PA612 bestehen. Weiterhin besteht auch die Möglichkeit, Copolyamide, die auf mehr als 50 Gew.-% ε-Caprolactam oder auf mehr als 50 Gew.-% Hexamethylendiamin und Adipinsäure basieren, einzusetzen. Als Beispiele seien hier nur stellvertretend PA6/12 oder PA66/6 genannt. Auch können cyclische aromatische Polyamide eingesetzt werden. Hierbei ist die Herstellung prinzipiell wie bei den aliphatischen Polyamiden aus Diamin und Dicarbonsäure durch Polykondensation, jedoch ist die eine oder andere Komponente eine aromatische Verbindung. Auch kann die Polyamidschicht eine Mischung aus den hier genannten Polyamiden enthalten.

Das Ethylen/Vinylalkohol-Copolymerisat enthält bevorzugt 40 bis 85 Mol-% Vinylacetat, die zu mindestens 90% verseift sind. Die Schmelzfließrate MFR liegt vorzugsweise im Bereich von 0,7 bis 20 g/10min gemessen nach ISO 1133 bei 190°C und einem Auflagegewicht von 2160 g. Die Dichte liegt vorzugsweise im Bereich von 1,1 bis 1,3 g/cm³ gemessen nach ASTM D1505.

Die Folie verfügt auf der Siegelseite über zwei Schichten bestehend aus Propylen-Copolymerisaten, die bis zu 15 Mol-% eines weiteren α-Olefins mit höchstens 12 C-Atomen enthalten, wobei der Gehalt der α-Olefine in beiden Schichten um 1 Mol-% differiert. Vorzugweise wird als α-Olefin Ethylen eingesetzt. Möglich sind aber auch Polymerisate, die neben Propylen und Ethylen weitere α-Olefine enthalten wie zum Beispiel Buten. Die Dichte der Propylen-Copolymerisate liegt vorzugsweise im Bereich von 0,88 bis 0,91 g/cm³ und der MFR(230°C/2,16) vorzugsweise von 1 bis 10 g/10min.

Zur Verbesserung der Konfektionierung können einer oder beiden Deckschichten der Folie übliche Additive zugesetzt werden. Dies sind zum Beispiel organische oder anorganische Antiblockmittel oder aber ein Gleitmittel oder aber Antistatika. Bekannte Antiblockmittel sind beispielsweise anorgansiche, unverträgliche Polymerisate wie Polyamid, Polyester, Polycarbonat und dergleichen oder anorganische Substanzen wie Siliziumdioxid oder Silicate. Gleitmittel sind beispielsweise Fettalkohole, Fettsäurediamide oder andere Stoffe, wie sie bei Piringer angegeben werden (Otto Piringer: Verpackungen für Lebensmittel, VCH Verlagsgesellschaft 1993, siehe S. 53). Bekannte Antistatika sind nach Domininghaus (S. 23) bei den sogenannten inneren Antistatika ethoxylierte tertiäre Amine von Fettsäuren oder ethoxylierte Glykolester von Fettsäuren oder aber bei den äußeren Antistatika quaternäre Ammoniumsalze von Fettsäuren.

Die Verbindung zwischen der Polyamid und Ethylen/Vinylalkohol-Copolymerisat enthaltenen Schichten mit den auf Propylen basierenden Schichten auf der Siegelseite kann über Klebstoffsysteme oder Haftvermittler erfolgen. Unter dem Begriff Klebstoff wird ein nichtmetallischer Werkstoff verstanden, der zwei Folien durch Oberflächenhaftung und innere Festigkeit (Adhäsion und Kohäsion) verbinden kann, ohne das sich das Gefüge der Folien wesentlich ändert. Klebstoffen können auf Grund ihres Abbindemechanismus unterschieden werden: Zum einen können Klebstoffe ohne chemische Reaktion abbinden, der hochmolekular Klebende Stoff ist vor der Klebung vorhanden, und zum anderen können sie über eine chemische Reaktion den Klebenden Stoff bilden. Für die Verklebung müssen die Oberflächen mit dem Klebstoff benetzt werden. Bei Polyolefinen ist in der Regel die Benetzung zu verbessern, man kann sie zum Beispiel durch eine Oxidation, wie sie durch eine elektrische Entladung erreicht wird, erhöhen.

Als Haftvermittler werden vorzugsweise modifizierte Polyolefine eingesetzt. Vorzugsweise sind dies Homo- oder Co-Polyolefine mit Carboxylgruppen wie zum Beispiel Polypropylen oder Polyethylen, die mindestens ein Monomer aus der Gruppe der α,β-einfach ungesättigten Dicarbonsäuren, wie zum Beispiel Maleinsäure, Fumarsäure, Itaconsäure oder deren Säureanhydride, Säureester, Säureamide oder Säureimide aufgepfropft enthalten, Copolymerisate von Ethylen mit α,β-einfach ungesättigten Carbonsäuren, wie Acrylsäure, Methycrylsäure oder aber deren Metallsalzen (Zn, Na) und/oder deren Alkyl(C1-C4)estern oder entsprechende Pfropfpolymere der genannten Monomere auf Polyolefine wie Polyethylen oder Polypropylen oder deren Mischungen.

Es besteht auch die Möglichkeit, die erfindungsgemäße Folie mit einem mindestens monoaxial gereckten Film PA/EVOH/PA zu bilden. Die aus den beiden Propylen-Copolymerisaten bestehenden Siegelschichten können zum Beispiel mittels eines Klebstoffs mit dem gereckten PA/EVOH/PA-Film verbunden werden.

Mindestens eine der angeführten Schichten kann nach Bedarf eingefärbt sein. Die erfindungsgemäßen Folien können auch bedruckt sein. Dies kann auf der Siegelschicht abgewandten Seite und/oder zwischen den Schichten erfolgen. Die Bedruckung einer innerhalb der mehrschichtigen Folie liegenden Schicht kann dann erfolgen, wenn Folien aus unterschiedlichen Fertigungsschritten zusammengefügt werden.

Durch den Einsatz der erfindungsgemäßen Mehrschichtfolie gelingt es bei niedrigem Flächengewicht die Sauerstoff und Wasserdampfbarriere unterhalb der für Barrierefolien üblichen Permeabilitäten von 100 cm³/(m² d bar) für O₂ und 10 g/(m² d) für H₂O zu halten (siehe Delventhal) und trotzdem die mechanischen Festigkeiten und optischen Eigenschaften gegenüber den bislang auf dem Markt befindlichen Folien zu steigern. Die Durchstichfestigkeit der Folie ist deutlich gesteigert worden, dies hat insbesondere für die Verpackung scharfkantiger Füllgüter große Vorteile. Von der Verpackungsmaschine bis zum Kunden bleibt nun die Ware besser geschützt. Da mit der erfindungsgemäßen Folie auch eine sehr niedrige Trübung erreicht werden konnte, kann die Ware optisch besser präsentiert werden.

Es war nicht zu erwarten, daß mit der erfindungsgemäßen Mehrschichtfolie bei reduzierter Foliendicke die Durchstichfestigkeit gesteigert werden konnte. Bislang konnten die mechanischen Festigkeiten einer Folie nur durch dickere Folien erreicht werden, was allerdings in der Regel Nachteile in der optischen Beurteilung bedingte. Mit der erfindungsgemäßen Folie ist daher auch unter ökologischen Aspekten ein deutlicher Forstschritt erzielt worden.

Die Folie eignet sich besonders zur Verpackung von Lebensmitteln. Ganz besonders eignet sich diese Folie zur Verpackung von oxidationsempfindlichen Lebensmittels oder Produkten, die mit einer modifizierten Atmosphäre verpackt werden.

Die Herstellung der erfindungsgemäßen Folie kann auf konventionellen, mehrschichtigen Blas- oder Flachfolienanlage erfolgen.

Ist es nicht möglich alle Schichten in einem Fertigungsschritt in der Coextrusionstechnik herzustellen, so kann der erfindungsgemäße Film auch in mehreren Schritten gefertigt werden. Vorzugsweise wird der Polyamid und Ethylen/Vinylalkohol-Copolymerisat enthaltene Film auf einer Flachfilmanlage hergestellt. Die zweischichtige Propylen-Copolymerisat-Siegelschicht wird vorzugsweise auf einer Flachfolienanlage gefertigt. Beide Folien werden vorzugsweise klebstoffkaschiert. Es ist aber auch möglich, die zweischichtige Propylen-Copolymerisat-Siegelschicht in der Extrusionsbeschichtung mit dem Polyamid und Ethylen/Vinylalkohol-Copolymerisat enthaltenen Film zu verbinden. Hierzu ist es notwendig die Verbundhaftung zwischen Polyamid oder Ethylen/Vinylalkohol-Copolymerisat durch Einsatz eines auf Propylen basierenden Haftvermittlers oder eines Klebstoffes zu erhöhen.

Eine Färbung des ansonsten transparenten Films wird vorzugsweise durch entsprechende Farbmasterbatche erreicht, die mit dem Polyamid oder Propylen-Copolymerisat in der Schmelze vermischt werden.

Die Bedruckung des Films erfolgt vorzugsweise nach den gängigen Techniken wie zum Beispiel Flexo- oder Tiefdruck auf die der Siegelschicht abgewandte Seite der Folie oder auf eine innerhalb des Folienverbundes liegende Schicht.

Das Flächengewicht der Folien wird wie folgt bestimmt. Aus einer zu messenden Folienbahn wird mit Hilfe einer 100 cm² großen Schablone eine saubere und fehlerfreie Probe geschnitten. Die Probe wird auf einer Analysenwaage auf 1 mg genau ausgewogen. Das Meßergebnis wird in g/m² angegeben. Die Messung erfolgt, wenn nicht anders angegeben, bei einem Raumklima von 23°C und 50% relativer Luftfeuchte.

Die Bestimmung der Sauerstoffdurchlässigkeit wird entsprechend des Entwurfes DIN 53380 Teil 3 in der Fassung vom Juli 1989 nach dem Trägergas-Verfahren vorgenommen. Sie ist definiert als die Menge Sauerstoff in Nml, die in 24 Stunden durch einen Quadratmeter Folie bei einem bar Differenzdruck bei einem bestimmten Klima diffundiert. Gemessen wird die Sauerstoffdurchlässigkeit mit dem Gerät Ox-Tran 100 der Fa. Mocon Instrument. Die Sauerstoffdurchlässigkeit wird, wenn nicht weiter spezifiziert, in cm³/(m² d bar) bei 0% relativer Feuchte und einer Temperatur von 23°C angegeben.

Die Bestimmung der Wasserdampfdurchlässigkeit wird entsprechend der DIN 53122 Blatt 1 vorgenommen. Sie ist definiert als die Menge Wasserdampf in g, die in 24 Stunden durch einen Quadratmeter Folie bei einen bestimmten Feuchtigkeitsgefalle und Temperatur diffundiert. Die Prüfbedingungen entsprechen dem Normal-Klima nach DIN 50014 (Temperatur 23°C, Feutigkeitsgefälle von 85% auf 3% relativer Luftfeuchte).

Die Durchstichprüfung dient der Beurteilung von Folien, die mit spitzen Gegenständen beansprucht werden. Die Durchsticharbeit ist die zum Durchstechen einer membranartig aufgespannten Folie notwendige Arbeit. Es werden aus einem Folienmuster kreisförmige Proben mit dem Durchmesser 80 mm entnommen und membranartig in die Probenhalterung der elektronischen Zugprüfmaschine eingesetzt. Die Probenhalterung besitzt einen freien Durchmesser von 50 mm. Die Durchsticharbeit bestimmt sich aus dem Integral von Kraft mal Weg, die zum Durchstechen der Probe notwendig ist. Sie wird in N*cm angegeben. Der Prüfdorn besitzt an seiner Spitze einen unter 90° abgeschliffenen Kegel mit einem Durchmesser von 1 mm.

Die Probe wird mit einer Geschwindigkeit von 100 mm/min durchstochen.

Die Trübung dient dem Vergleich von transparenten Folien. Die Messung erfolgt in % Trübung entsprechend % Haze nach der ASTM Prüfnorm D 1003-61m, Procedure A, nach Kallibrierung des Meßgerätes mit Trübungsnormalen zwischen 0,3 und 34% Trübung (Haze).

Die ersten drei Schichten der Folie bestehen aus Polyamid 6 (PA6) und Ethylen-Vinylalkohol-Copolymerisat (EVOH) in der Schichtfolge PA6/EVOH/PA6. Der Verbund PA6/EVOH/PA6 in der Schichtdickenaufteilung 27/5/27 µm ist auf einer konventionellen Flachfolienanlage coextrudiert worden. Dabei wird die natürliche Affinität zwischen den Polymeren PA6 und EVOH genutzt, auf eine haftvermittelnde Schicht kann verzichtet werden.

Das Polyamid 6 (PA6) ist ein Standardprodukt, wie es für die Herstellung von Folien üblicher Weise eingesetzt wird. Es hat eine Dichte von 1,14 g/cm³ gemessen nach DIN 53479. Die Schmelztemperatur gemessen nach DIN 3146 Methode C liegt zwischen 217°C und 221°C. Die Viskositätszahl gemessen in 96%-iger Schwefelsäure liegt zwischen 200 und 220 ml/g gemessen nach DIN 53727 bei einer PA-Konzentration von 5 g/l. Das Polyamid ist nukleiert.

Das Ethylen/Vinyl-Copolymerisat ist ein Standardprodukt, wie es für die Herstellung von Folien üblicher Weise eingesetzt wird. Es enthält ca. 68 Mol-% Vinylacetat, die zu mindestens 90% verseift sind. Die Schmelzfließrate MFR liegt bei 1,3 g/10 min gemessen nach ISO 1133 bei 190°C und einem Auflagegewicht von 2,16 kg. Die Dichte des EVOH beträgt 1,19 g/cm³ gemessen nach ASTM D 1505.

Der so hergestellte PA6/EVOH/PA6 - Verbund ist Grundlage für das vorgestellte Beispiel und die Vergleichsbeispiele. Alle weiteren Schichten der Folie werden mittels eines stickstoffbasierenden Klebstoffsystems (Kl) mit dem Film PA6/EVOH/PA6 verbunden. Die Folienaufbauten sind so gewählt, daß der Aufbau PA6/EVOH/PA6/Kl im Beispiel und in allen Vergleichsbeispielen gleich bleibt. Somit ist der Einfluß des PA6/EVOH/PA6/Kl - Verbundes in allen Fällen derselbe.

Die in den Beispielen genannten, polyolefinischen Schichten sind auf konventionellen, mehrschichtigen Blas- oder Flachfolienanlagen hergestellt worden. Alle genannten Polymere sind kommerziell erhältliche Handelsprodukte. Die angegeben Dichten sind entsprechend ISO 1183 bei 23°C und die Schmelzfließraten MFR entsprechend ISO 1133 bestimmt worden, wobei die zuerstgenannte Zahl in der Klammer die Temperatur und die zweitgenannte Zahl das Auflagegewicht kennzeichnet.

### Beispiel 1

| Folienaufbau: | | | | | | |
|---|---|---|---|---|---|---|
| PA6 | EVOH | PA6 | Kl | E/P-1 | E/P-2 | |
| 27 | 5 | 27 | ca.1 | 13 | 37 | µm |

Die Siegelschicht (E/P-2) ist zusammen mit einer zweiten Schicht aus einem statistischen Propylen/Ethylen-Copolymerisats (E/P-1) auf einer Flachfolienanlage coextrudiert worden. Das statistische Propylen/Ethylen-Copolymerisat E/P- 1 enthält ca. 8 Mol-% Ethylen. Die Dichte von E/P-1 liegt bei 0,9 g/cm³. Die Schmelzfließrate MFR (230°C/2,16) von E/P-1 liegt bei 8 g/10 min. Die mittels DSC bestimmte Schmelztemperatur liegt bei ca. 138°C.

Das statistische Propylen/Ethylen-Copolymerisat E/P-2 bildet die Siegelschicht. Es enthält ca. 5 Mol-% Ethylen. Die Dichte von E/P-2 liegt bei 0,895 g/cm³. Die Schmelzfließrate MFR (230°C/2,16) von E/P-2 liegt bei 5 g/10 min. Der mittels DSC bestimmte Peak in der Schmelztemperatur liegt bei 137°C gemessen nach ASTM D3418. Die Siegelschicht enthält Antiblockmittel (1000 ppm SiO₂).

### Vergleichbeispiel 2

| Folienaufbau: | | | | | |
|---|---|---|---|---|---|
| PA6 | EVOH | PA6 | Kl | E/P-3 | |
| 27 | 5 | 27 | ca.1 | 75 | µm |

Das Vergleichsbeispiel 2 enthält eine 75 µm dicke Siegelschicht. Die Siegelschicht besteht aus dem statistischem Propylen/Ethylen-Copolymerisat E/P-3; sie wurde als Flachfolie gefertigt. Die Schmelzfließrate MFR (230°C/2,16) von E/P-3 liegt bei ca. 8 g/10 min. Die Dichte der Propylen/Ethylen-Copolymerisat Folie liegt bei 0,905 g/cm³; sie enthält Gleit- und Antiblockmittel (1000 ppm Ölsäureamid und 1000 ppm SiO₂). Die Siegeltemperatur der E/P-3 Folie beginnt bei 130 °C.

### Vergleichbeispiel 3

| Folienaufbau | | | | | | |
|---|---|---|---|---|---|---|
| PA6 | EVOH | PA6 | Kl | PE-1 | (PE-2 + PE-3) | |
| 27 | 5 | 27 | ca.1 | 60 | 40 | µm |

Beim Vergleichsbeispiel 3 ist die Siegelseite der Folie aus zwei Schichten basierend auf Polyethylen zusammengesetzt. Die 60 µm dicke Schicht PE-1 besteht aus einem Polyethylen niedriger Dichte (0,915 g/cm³) mit einer Schmelzfließrate MFR (190°C/2,16) von 8 g/10min. Das Polyethylen der Schicht PE-1 wird über eine Extrusionsbeschichtung schmelzeflüssig mit dem Film (PE-2 + PE-3) verbunden.

(PE-2 + PE-3) charakterisiert einen 40 µm dicken Blasfilm, der zu 50 Gew.-% aus einem Polyethylen niedriger Dichte PE-2 und zu 50 Gew.-% aus einem linearen Polyethylen niedriger Dichte PE-3 besteht. Das Polyethylen PE-2 hat eine Dichte von 0,923 g/cm³, eine Schmelzfließrate MFR (190°C/2,16) von 2 g/10 min und eine Vicaterweichungstemperatur (gemessen nach ASTM D1525) von 95.5°C. Das Polyethylen PE-3 enthält als Comonomer Buten-1; es hat eine Dichte von 0,919 g/cm³, eine Schmelzfließrate MFR (190°C/2,16) von 0,7 g/10 min und eine Vicaterweichungstemperatur (gemessen nach ASTM D1525) von 122°C. Der Blasfilm (PE-2 + PE-3) enthält Gleit- und Antiblockmittel (350 ppm Erucasäureamid und 900 ppm SiO₂).

### Vergleichbeispiel 4

| Folienaufbau | | | | | |
|---|---|---|---|---|---|
| PA6 | EVOH | PA6 | Kl | (PE-2 + PE-3) | |
| 27 | 5 | 27 | ca.1 | 120 | µm |

Das Vergleichsbeispiel 4 enthält eine Siegelschicht bestehend aus Polyethylen. Die Siegelschicht (PE-2 + PE-3) entspricht dem im Vergleichsbeispiel 3 erwähnten Blasfilm (PE-2 + PE-3), sie unterscheidet sich lediglich in der Dicke.

Bei allen Mustern sind entsprechend der oben aufgeführten Prüfvorschriften das Flächengewicht, die Sauerstoff- und Wasserdampfdurchlässigkeit, die Durchstichfestigkeit und die Trübung bestimmt worden. Die Durchlässigkeit der Folien liegt bei allen Mustern im Bereich Kleiner 1 cm³/(m² d bar) für Sauerstoff sowie kleiner 1 g/(m² d) für die Wasserdampf. Alle Muster sind daher entsprechend der Definition von Delventhal als Barrierefolien einzustufen. Überraschend ist, daß das dünnste Muster (Beispiel 1) mit dem niedrigsten Flächengewicht die geringste Trübung und gleichzeitig die größte Durchstichfestigkeit aufweist.

| Bezeichnung | Flächengewicht kg/m² | Durchstichfestigkeit N*cm | Trübung % |
|---|---|---|---|
| Beispiel 1 | 0,115 | 6,2 | 5,9 |
| Vergleichsbeispiel 2 | 0,138 | 5,2 | 7,9 |
| Vergleichsbeispiel 3 | 0,163 | 3,8 | 13 |
| Vergleichsbeispiel 4 | 0,183 | 3,2 | 16 |

## Patentansprüche

1. Siegelbare Verbundfolie aus einem Substrat, das mindestens eine Schicht Polyamid und mindestens eine Schicht Ethylen/Vinylalkohol-Copolymer enthält, mit einer zweilagigen Siegelschicht, wobei die beiden Siegelschichten aus Propylen-Copolymerisaten, welche bis zu 15 Mol-% weitere α-Olefine mit höchstens 12 CAtomen enthalten, bestehen, die sich im Gehalt der α-Olefine um mehr als 1 Mol-% unterscheiden.

2. Verbundfolie nach Anspruch 1, dadurch gekennzeichnet, daß die Polyamidschicht teilkristallines Polyamid 6, 66, 11, 12, 69, 610, 612 und/oder Copolyamide, basierend auf mehr als 50 Gew.-% ε-Caprolactam oder basierend auf mehr als 50 Gew.-% Hexamethylendiamin und Adipinsäure, und/oder amorphe Polyamide und/oder Mischungen aus den genannten Polyamiden enthält.

3. Verbundfolie nach mindestens einem der vorgehenden Ansprüche 1 bis 2, dadurch gekennzeichnet, daß das Ethylen/Vinylalkohol-Copolymerisat aus verseiftem Ethylen/Vinylacetat-Copolymerisat mit 40 bis 85 Mol-% Vinylacetateinheiten, die zu wenigstens 90% verseift sind, besteht.

4. Verbundfolie nach mindestens einem der vorgehenden Ansprüche 1 bis 3, dadurch gekennzeichnet, daß die Propylen-Copolymerisate als α-Olefine vorzugsweise Ethylen oder aber Ethylen und Buten enthalten.

5. Verbundfolie nach mindestens einem der vorgehenden Ansprüche 1 bis 4, dadurch gekennzeichnet, daß die Folie einen längsgereckten Film aus PA6/EVOH/PA6 enthält.

6. Verbundfolie nach mindestens einem der vorgehenden Ansprüche 1 bis 5, dadurch gekennzeichnet, daß die der Siegelschicht abgewandte Folienseite und/oder eine weitere Schicht der Folie bedruckt ist.

7. Verwendung der Verbundfolie gemäß mindestens einem der vorgehenden Ansprüche 1 bis 6 zur Verpackung von Lebensmitteln.

8. Verwendung der Verbundfolie gemäß mindestens einem der vorgehenden Ansprüche 1 bis 6 zur Verpackung von Lebensmitteln oder Produkten, die in einer modifizierten Atmosphäre verpackt werden.
